# EUROPÄISCHE PATENTSCHRIFT

(11) **EP 0 303 903 B1**
(45) Veröffentlichungstag und Bekanntmachung des Hinweises auf die Patenterteilung: **20.10.1993**
(21) Anmeldenummer: 88112689.0
(22) Anmeldetag: 04.08.1988
(51) Int. Cl.: H02G 3/12

(54) **Unterputzdose für insbesondere Mauerwerks- und Hohlwandmontage**
Flush-mountable box for mounting, especially in brickwork and cavity walls
Boîte encastrée pour le montage, notamment dans la maçonnerie et les parois creuses

(30) Priorität: 18.08.1987 DE 8711217 U; 19.05.1988 DE 3817100
(43) Veröffentlichungstag der Anmeldung: 22.02.1989
(73) Patentinhaber: Spicker, Hugo, Dipl.-Ing., D-42697 Solingen (DE)
(72) Erfinder: Spicker, Hugo, Dipl.-Ing., D-42697 Solingen (DE)
(74) Vertreter: Sturies, Herbert

(56) Entgegenhaltungen:
- DE-A- 3 512 425
- FR-A- 2 308 229
- NL-A- 6 408 233

## Beschreibung

Die Erfindung betrifft eine zur Aufnahme elektrischer Installationsgeräte und/oder Leitungen dienende, aus Kunststoff bestehende Unterputzdose für insbesondere Mauerwerks- und Hohlwandmontage, mit an mindestens drei über den Umfang des Dosenmantels verteilt angeordneten Stellen vorhandenen, nach außen vorspringenden, federnden Klemmitteln.

Eine Unterputzdose obiger Art ist durch die NL-A-64 08 233 bekannt. Ihre Klemmittel bestehen aus insgesamt sechs über den Dosenumfang verteilt angeordneten einfachen Klemmzungen, die jeweils durch torrahmenartige Einschnitte teilweise aus dem Dosenmantel herausgetrennt und an ihren oberen, paarweise verschieden hoch liegenden Enden nach außen abgebogen sind. Dabei liegen je zwei der die weniger hohen Enden aufweisenden Klemmzungen dosenumfangsmäßig im wesentlichen nebeneinander, während das dritte Klemmzungenpaar mit seinem höchsten, nämlich dem offenen Dosenrand nächstliegenden Ende dazu um etwa 90° drehversetzt angeordnet ist, so daß diese Unterputzdose insgesamt an im wesentlichen vier gleichmäßig über ihren Umfang verteilten Stellen in der vorgebohrten Mauer- und/oder Hohlwandöffnung klemmend abgestützt werden kann, ohne daß es dazu des herkömmlichen, gleichwohl zeitraubenden wie auch lohnkostenintensiven Eingipsens der Unterputzdose bedarf. Durch ihre vierfache Umfangsabstützung unterscheidet sich diese Unterputzdose vorteilhaft von anderen bekannten Unterputzdosen mit nur zwei an einem auf den Dosenmantel aufzustreifenden Klemmring gegenüberliegend sitzenden Klemmzungen, die bei im Durchmesser angepaßten Einbau-Öffnungen einen Festsitz der Dosen gewährleisten, sowie gegenüber einer anderen, z.B. durch die DE-OS 23 28 393 bekannten Unterputzdose, bei der die Klemmittel aus zwei Klemmkeilen bestehen, die in zwei am Dosenmantelumfang gegenüberliegend angeordneten, axial verlaufenden Kanälen geführt und mittels je einer Spannschraube axial zu verstellen und dabei nach außen zu drücken sind. Demgegenüber besitzt die gattungsgemäße Unterputzdose mit ihren grundsätzlich vier über ihren Umfang gleichmäßig verteilt angeordneten Klemmzungen eine größere Einbau-Anpassungsfähigkeit auch gegenüber im Durchmesser stärker differierenden Einbau-Öffnungen. Da jedoch ihre umfangsmäßig einzeln angeordneten, noch dazu vergleichsweise tief in den Dosenmantel eingeschnittenen Klemmzungen nur vergleichsweise geringe Feder- bzw. Klemmkräfte aufzunehmen vermögen, ist auch ihr Klemmbefestigungssitz in der Mauer- oder Hohlwandöffnung nur entsprechend schwach.

Der Erfindung liegt demgegenüber die Aufgabe zugrunde, eine Unterputzdose der eingangs erwähnten Gattung dahingehend zu verbessern und zu vervollkommnen, daß sie eine noch wesentlich größere Einbau-Anpassungsfähigkeit besitzt, also auch in Aufnahmeöffnungen von vergleichsweise großen Durchmesserunterschieden und darin ggfs. auch exzentrisch befestigt werden kann.

Diese Aufgabe wird ausgehend von der gattungsgemäß beschaffenen Unterputzdose erfindungsgemäß dadurch gelöst, daß ihre Klemmittel aus mit widerhakenartig schräg angeordneten, ablängbaren, federnden Halteborsten versehenen Halteborstenkämmen bestehen, die jeweils mit ihren Einschiebeschäfte bildenden Stegen in im Dosenmantel vorhandene, entsprechend profilierte, nach außen offene Einschiebekanäle auswechselbar eingeschoben sind.

Auf diese Weise wird die Unterputzdose in ihrer Aufnahmeöffnung nicht nur besser fixiert, sondern sie kann durch ganzes oder teilweises Entfernen ihrer Halteborsten bzw. -borstenkämme auch exzentrisch in die Aufnahmeöffnung im Mauerwerk oder in der Hohlwand klemmbefestigt werden. Dafür sind die Einschiebekanäle und die darin einzuschiebenden Halteborstenkämme vorzugsweise gleichmäßig über den Umfang des Dosenmantels verteilt angebracht. Die größere Anpassungsfähigkeit der Unterputzdose wird aber nicht nur durch entsprechendes Ablängen der Halteborsten, sondern auch dadurch erreicht, daß man beim Einsetzen der Unterputzdose in die vorgebohrte Einbauöffnung die Dose nicht nur axial sondern auch leicht drehend einsetzen kann, wodurch die äußeren Enden der Halteborsten sich entsprechend schräg stellen. Durch die Einschiebekanäle wird zugleich auch der Dosenmantel in seiner Steifigkeit verbessert.

Die Einschiebekanäle im Dosenmantel verlaufen vorteilhaft achsparallel zur Dosenmittelachse und weisen zur Dosenoberseite hin eine verengte Durchtrittsöffnung für eine hier hindurchzusteckende Kopfschraube auf, die mit ihrem Gewindeschaft in eine im Steg des Halteborstenkammes vorhandene, axial verlaufende Bohrung einzudrehen bzw. einzuschneiden ist. Hierdurch können die Halteborstenkämme nach dem Einsetzen der Unterputzdose in die Aufnahmeöffnung und Anziehen der Kopfschrauben mehr oder weniger weit axial verschoben werden, wodurch sich diese Klemmbefestigung besonders für den Hohlwandeinbau der Unterputzdose eignet. Die dafür verwendeten Kopfschrauben sind vorteilhaft selbstschneidende Kunststoffschrauben.

Wie die Praxis gezeigt hat, empfiehlt es sich, die Unterputzdose mit insgesamt sechs gleichmäßig über ihren Umfang verteilt angeordneten Einschiebekanälen zu versehen. Durch diese Sechserteilung am Dosenumfang ist auch eine kombinierte Montage von mehreren Unterputzdosen in senkrechter oder waagerechter Position ohne weiteres möglich, wozu entsprechende Dosenverbinder verwendet werden können, die mit in die Einschiebekanäle der Dose einzuschiebenden Einschiebeschäften versehen sind. Weiterhin können in die Einschiebekanäle auch mit entsprechenden Einschiebezapfen versehene Klemmplatten eingeschoben werden, die mit unterseitig angeordneten Klemmleisten für eine Kanalgeräte-Montage der Unterputzdose versehen sind.

Die Einschiebekanäle können anstatt achsparallel auch in kreissegmentförmig profilierten Verdickungen der Dosenwand liegen und dazu im wesentlichen tangential verlaufen. Auch für diesen Fall können als Klemmittel in die Einschiebekanäle einzuschiebende Halteborstenkämme verwendet werden.

Es versteht sich, daß die Halteborstenkämme ebenso wie die Dosen selber vorteilhaft aus Spritzkunststoff bestehen, wobei für beide zweckmäßig unterschiedliche Kunststoffe verwendet werden, die den unterschiedlichen Anforderungen der Dose einerseits und den Halteborstenkämmen andererseits entsprechend ausgewählt werden.

In der Zeichnung sind mehrere Ausführungsbeispiele erfindungsgemäß beschaffener Unterputzdosen dargestellt. Dabei zeigen:
- Fig.1 und 2: die teilweise geschnittene Seitenansicht und Draufsicht auf eine mit sechs umfangsmäßig verteilt angeordneten Einschiebekanälen und drei darin verteilt eingeschobenen Halteborstenkämmen versehene Unterputzdose,
- Fig.3: die Draufsicht auf zwei miteinander verbundene Unterputzdosen mit einem in ihre Einschiebekanäle eingeschobenen Verbindungsteil, das in
- Fig.4: im Schnitt nach der Linie IV-IV der Fig.3 dargestellt ist,
- Fig.5: eine Unterputzdose mit in ihre Einschiebekanäle eingeschobener Klemmplatte für Hohlkanalgeräte-Montage,
- Fig.6: die Draufsicht auf die Klemmplatte der Fig.5,
- Fig.7: die Seitenansicht einer mit im wesentlichen tangential verlaufenden Einschiebekanälen versehenen Unterputzdose,
- Fig.8: einen Schnitt nach der Linie VIII-VIII der Fig.7,
- Fig.9: die zu Fig.7 gehörige Draufsicht und
- Fig.10: einen Schnitt nach der Linie X-X der Fig.9.

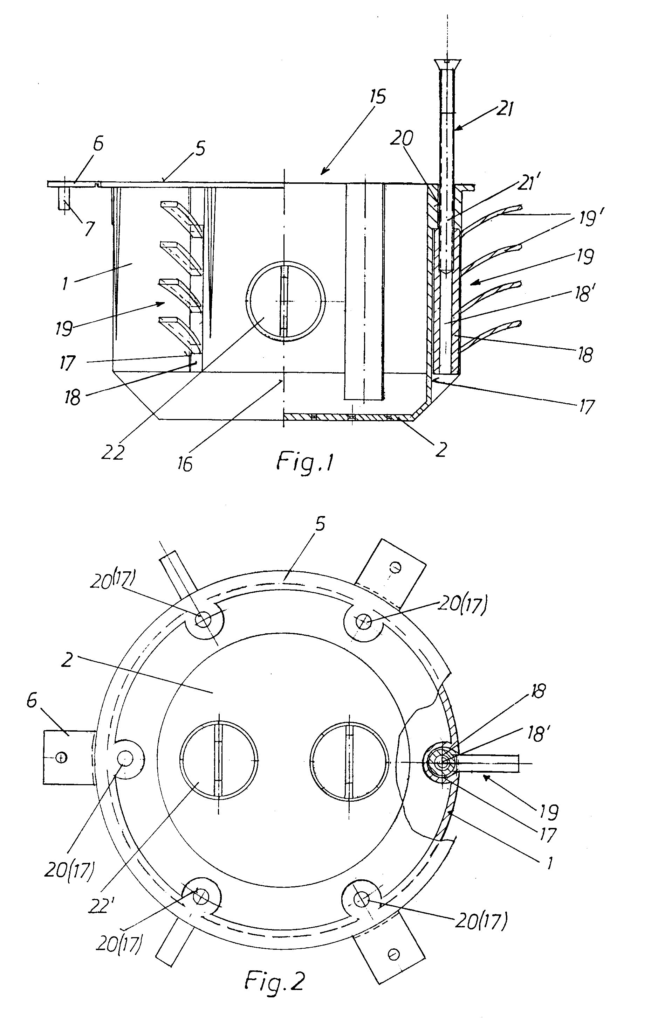

Die in den Fig.1 bis 3 dargestellte Unterputzdose 15 ist gleichwohl für Mauerwerks- wie auch für Hohlwand-Montage geeignet. Sie besteht aus Spritzkunststoff und besitzt einen im wesentlichen zylindrischen Mantel 1 sowie einen geschlossenen Boden 2. In ihnen sind vorgeprägte bzw. -geschnittene, leicht ausbrechbare Einbauöffnungen 22 bzw. 22' vorhanden. Weiterhin ist die Dose an ihrem Rand 5 mit sich radial erstreckenden, flach ausgeformten Abstandshaltern 6 versehen. Unmittelbar unterhalb von ihnen sind Stützrippen 7 vorgesehen, die bei der Mauerwerks-Montage dafür sorgen, daß der Dosenrand 5 in hinreichendem Abstand vor der Wand verläuft, damit nach dem Fertigeinputzen der Wand ein bündiger Abschluß zustande kommt. Die Stützrippen 7 können aber auch leicht abgebrochen werden, um bei der Hohlwand-Montage der Unterputzdose gleichfalls zu einem bündigen Abschluß mit der Gipskartonplatte zu kommen.

Die dargestellte Unterputzdose 15 besitzt insgesamt sechs achsparallel zur Dosenmittelachse 16 verlaufende Einschiebekanäle 17 für die darin auswechselbar einzusetzenden, mit einem entsprechend profilierten Einschiebeschaft 18 versehenen Klemmittel, die aus je einem mit widerhakenartig schräg angeordneten, federnden und ablängbaren Halteborsten 19' versehenen Halteborstenkamm 19 bestehen, dessen Steg den Einschiebeschaft 18 bildet. Die Einschiebekanäle 17 sind seitlich nach außen hin offen, jedoch hinterschnitten, wie das insbesondere der Teilschnitt in Fig.2 zeigt. Die Einschiebekanäle 17 besitzen danach ein sekantenartig abgeschnittenes, kreiszylindrisches Profil. Entsprechend profiliert sind auch die Einschiebeschäfte 18 der darin einzuschiebenden Halteborstenkämme 19. Deren Einschiebeschäfte 18 besitzen eine axial verlaufende Bohrung 18', in die eine durch die dosenoberseitig gelegene Durchtrittsöffnung 20 hindurchgesteckte Kopfschraube 21 mit ihrem selbstschneidenden Gewindeschaft 21' einzudrehen bzw. einzuschneiden ist.

Die Borsten 19' besitzen eine vergleichsweise große Flexibilität und erlauben es, die Unterputzdose 15 in Aufnahmebohrungen von vergleichsweise erheblich verschiedenem Durchmesser klemmend zu befestigen. Diese Anpassungsfähigkeit kann bereits dadurch erreicht werden, daß die Unterputzdose 15 beim Einsetzen in die Aufnahmeöffnung nicht nur axial sondern noch zusätzlich drehend bewegt wird, wobei es zu einem Schrägstellen der äußersten Borstenteile in Umfangs- bzw. Drehrichtung kommt. Darüber hinaus können die Halteborsten 19', die auch mit filmscharnierartigen Verengungen versehen sein können, auch leicht abgebrochen bzw. abgeknipst werden, wodurch die Unterputzdose für Aufnahmebohrungen mit vergleichsweise kleinem Durchmesserbereich geeignet wird. Schließlich können aber die Halteborsten 19' auch nur teilweise entfernt, etwa bloß auf einer Seite der Dose abgelängt werden, so daß dann die Dose exzentrisch in die zu ihrer Aufnahme bestimmte Öffnung eingesetzt werden kann. Letzteres ist vor allem für Mehrfachanordnungen von unmittelbar neben oder übereinander angeordneten Unterputzdosen von Vorteil, weil dadurch Ungenauigkeiten hinsichtlich der Lage der benachbarten Aufnahme-Bohrungen entsprechend ausgeglichen werden können, so daß sich dennoch eine ordnungsgemäß ausgerichtete Anordnung der Unterputzdosen sowie ihrer Deckel ergibt.

Die Unterputzdose ist nicht nur für Mauerwerks- sondern insbesondere auch für Hohlwand-Montage geeignet. Sie wird dazu etwa in der Fig.1 entsprechenden Lage von Halteborstenkamm 19 und Kopfschraube 21 in die in der Hohlwand befindliche Aufnahmeöffnung eingesetzt, wobei die Schrauben 21 mit den auf ihnen sitzenden Halteborstenkämmen 19 durch kurzen Handschlag od. dgl. soweit hereingeschlagen werden können, daß dabei wenigstens einige der Halteborsten 19' unter die Hohlwand bzw. Gipskartonplatte gelangen. Sodann werden bei Drehbetätigung der Kopfschrauben 21 die auf ihnen sitzenden Borstenkämme 19 zunehmend nach oben verschoben, wobei die entsprechenden federnden Halteborsten 19' unter die Kartonplatte greifen und dadurch die Unterputzdose in der Hohlwand festlegen.

Will man etwa bei Doppelanordnung zweier Unterputzdosen 15 zu deren Ausrichtung die eine oder auch beide in ihren Aufnahmeöffnungen exzentrisch einbauen, so braucht man dazu lediglich eine oder auch mehrere der Halteborstenkämme 19 aus den Einschiebekanälen 17 zu entfernen, wodurch dann die Unterputzdose bei ihrer Klemmbefestigung in der Aufnahmeöffnung einen in Richtung ihrer leeren Einschiebekanäle 17 verschobenen exzentrischen Sitz in der Aufnahmeöffnung erhält.

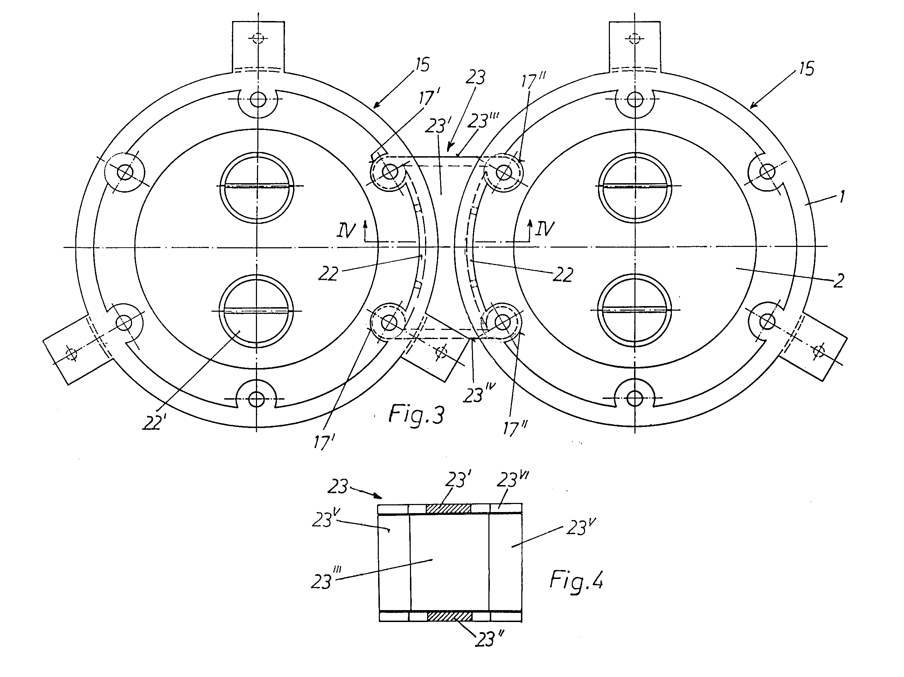

Die Fig.3 veranschaulicht, wie zwei Unterputzdosen 15 der in den Fig.1 und 2 dargestellten Art eng benachbart miteinander verbunden werden können, etwa um zwischen ihre benachbart liegenden Wandteile Stromkabel od.dgl. Leitungen geschützt hindurchführen zu können. Zu diesem Zweck sind in den Dosenwänden zwischen je zwei benachbarten Einschiebekanälen 17' bzw. 17'' vorgeprägte bzw. -geschnittene, leicht ausbrechbare Durchtrittsöffnungen 22 vorhanden. Die Verbindung erfolgt über einen in die Einschubkanäle 17',17'' einzuschiebenden Dosenverbinder 23. Dieser kann wie im dargestellten Fall aus jeweils zwei identischen Ober- und Unterteilen 23' bzw. 23'' sowie den beiden Seitenwandteilen 23''' und 23^{IV} bestehen. Diese vier Teile sind allesamt mit an ihren Enden vorhandenen Einschiebeschäften 23^{V} bzw. Einschiebeprofilen 23^{VI} versehen, über die sie in die Einschiebekanäle 17 der Unterputzdosen 15 einzuschieben sind. Dadurch kommt eine stabile Verbindung der beiden Unterputzdosen zustande, die die letztere miteinander verbindenden, durch die freigelegten Durchtrittsöffnungen 22 hindurchgeführten Leitungen allseitig gut abschirmt.

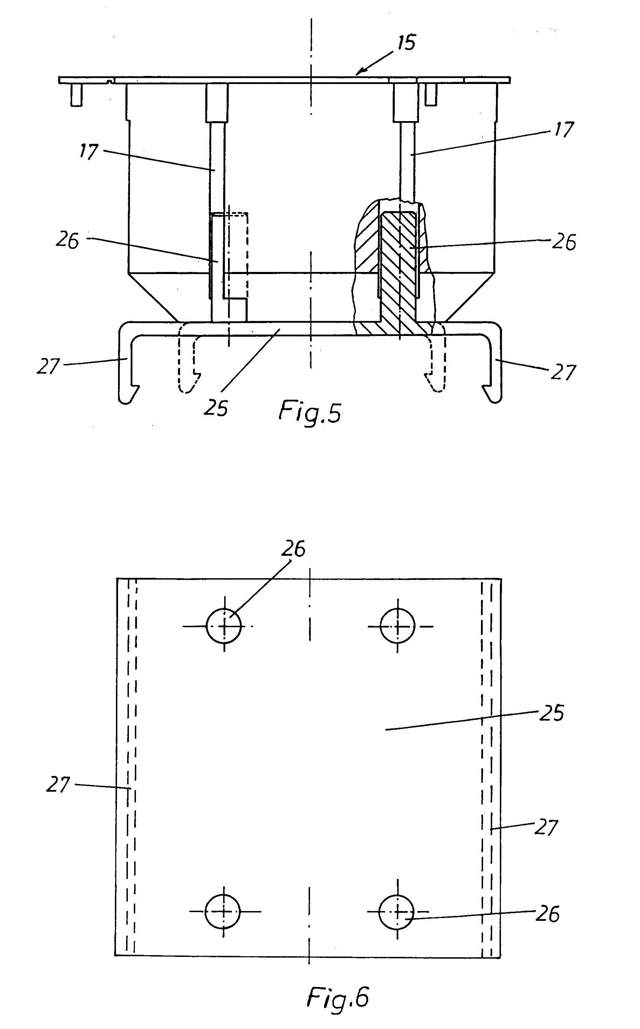

Die in Fig.5 dargestellte Unterputzdose 15 ist wiederum von der in den Fig.1 und 2 gezeichneten Ausbildung, also gleichfalls mit sechs über ihren Wandumfang gleichmäßig verteilt angeordneten Einschiebekanälen 17 versehen. Diese dienen hier jedoch zumindest teilweise zur Aufnahme von an einer Klemmplatte 25 vorgesehenen Einschiebezapfen 26. Auf ihrer Unterseite besitzt die Klemmplatte 25 Klemmleisten 27, über die sie auf entsprechende Profilleisten von damit versehenen Fensterbank- od.dgl. Kabelkanälen aufgeklemmt werden kann. Hierdurch ist also auch eine einfache Kanalgerätemontage der Unterputzdose möglich. Dabei versteht es sich, daß anstelle der Klemmplatte 25 auch andere, insbesondere kleinere Klemmteile bzw. -stücke an der Unterputzdose bodenseitig angebracht bzw. in deren Einschiebekanäle 17 eingeschoben werden können.

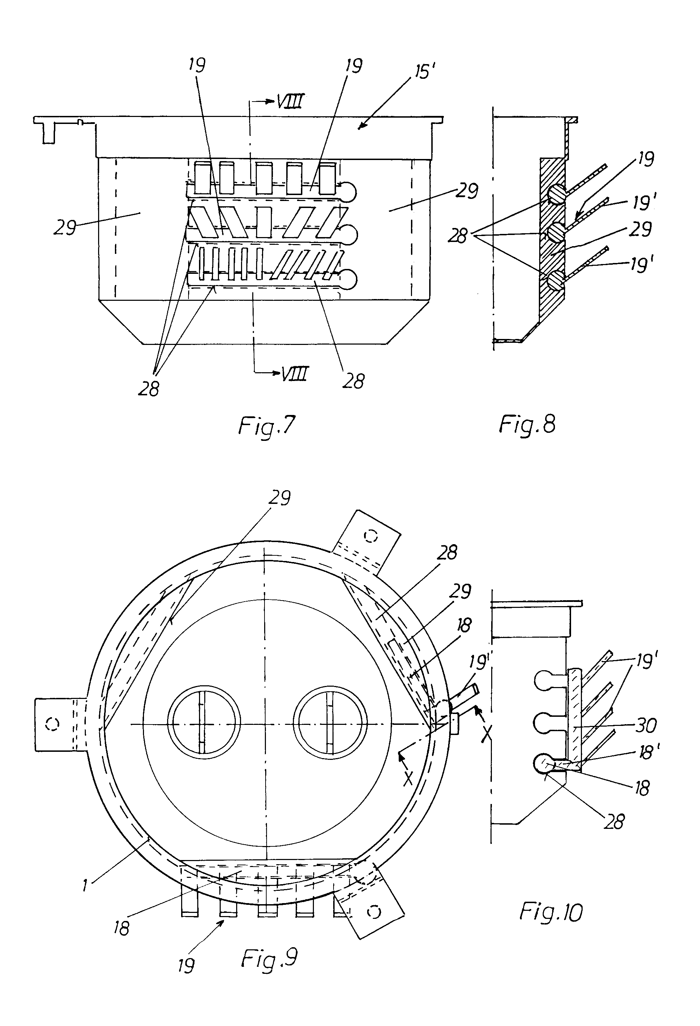

Bei der in den Fig.7 bis 10 abgebildeten Unterputzdose 15' sind gleichfalls mehrere, und zwar mindestens drei über deren Wandumfang gleichmäßig verteilt angeordnete Einschiebekanäle 28 vorhanden, die hier allerdings nicht achsparallel sondern im wesentlichen tangential zur Dosenwand 1 verlaufen und dazu in kreissegmentförmig profilierten Verdickungen 29 der Dosenwand liegen. Es sind hier drei solche Dosenwandverdickungen 29 vorhanden, in denen jeweils drei übereinander angeordnete, parallel zueinander verlaufende Einschiebekanäle 28 vorgesehen sind. Die darin einzuschiebenden Klemmittel bestehen wiederum aus mit federnden Halteborsten 19' versehenen Halteborstenkämmen 19. Auch hier dienen die entsprechend kreiszylindrisch profilierten Stege 18 der Halteborstenkämme als Einschiebezapfen, die zweckmäßig leicht klemmend in den Einschiebekanälen 28 sitzen. Die Form der Halteborsten 19' kann unterschiedlich sein, wie das auch die Draufsicht in Fig. 7 beispielhaft zeigt. Auch können die Halteborstenkämme von der in Fig.9 und 10 dargestellten Form sein, nämlich aus dem Einschiebezapfen 18 und dem damit über eine zweifache Abwinkelung 18' verbundenen Tragstutzen 30 mit den daran übereinander sitzenden Halteborsten 19' bestehen. Für diesen Fall wird also jeweils nur einer der in den kreissegmentförmig profilierten Verdickungen 29 gelegenen Einschiebekanäle 28 für die Aufnahme des am Halteborstenkamm vorhandenen Einschiebeschaftes 18 benutzt, wie das die Fig.10 zeigt.

Die erfindungsgemäß beschaffene Unterputzdose ist universell verwendbar, nämlich sowohl für Mauerwerks- wie auch für Hohlwand- und Gerätekanaleinbau geeignet, wobei sie etwa bei schief im Mauerwerk gebohrten Aufnahmeöffnungen durch Weglassen oder teilweises Verkürzen ihrer vorzugsweise gleichmäßig über den Umfang verteilt angeordneten Halteborstenkämme auch exzentrisch in die Aufnahmeöffnung eingebaut werden kann, so daß die Unterputzdosen auch bei nicht waagerecht oder lotrecht gebohrten Aufnahmeöffnungen im Mauerwerk entsprechend ausgerichtet werden können.

## Patentansprüche

1. Zur Aufnahme elektrischer Installationsgeräte und/oder Leitungen dienende, aus Kunststoff bestehende Unterputzdose (15) für insbesondere Mauerwerks- und Hohlwandmontage, mit an mindestens drei über den Umfang des Dosenmantels (1) verteilt angeordneten Stellen vorhandenen, nach außen vorspringenden, federnden Klemmitteln (19), **dadurch gekennzeichnet**, daß die Klemmittel aus mit widerhakenartig schräg angeordneten, ablängbaren, federnden Halteborsten (19') versehenen Halteborstenkämmen (19) bestehen, die jeweils mit ihren Einschiebeschäfte bildenden Stegen (18) in im Dosenmantel (1) vorhandene, entsprechend profilierte, nach außen offene Einschiebekanäle (17 bzw. 28) auswechselbar eingeschoben sind.

2. Unterputzdose nach Anspruch 1, **dadurch gekennzeichnet**, daß die Einschiebekanäle (17) achsparallel zur Dosenmittelachse (16) verlaufen und zur Dosenoberseite (5) hin eine verengte Durchtrittsöffnung (20) für eine hier hindurchzusteckende Kopfschraube (21) aufweisen, die mit ihrem Gewindeschaft (21') in eine im Steg (18) des Halteborstenkammes (19) vorhandene, axial verlaufende Bohrung (18') einzudrehen bzw. einzuschneiden ist (Fig.1,2).

3. Unterputzdose nach Anspruch 2, **dadurch gekennzeichnet**, daß sie mit insgesamt sechs gleichmäßig über ihren Umfang verteilt angeordneten Einschiebekanälen (17) versehen ist.

4. Unterputzdose nach Anspruch 3, **dadurch gekennzeichnet**, daß in der Dosenwand (1) zwischen zwei benachbarten Einschiebekanälen (17) vorgeprägte bzw. -geschnittene, leicht ausbrechbare Durchtrittsöffnungen (22) vorhanden und je zwei benachbarte Unterputzdosen (15) durch einen mit in die benachbarten Einschiebekanäle (17' bzw. 17'') der Dosen (15) einzuschiebenden Einschiebeschäften (23^{V}, 23^{VI}) versehenen Dosenverbinder (23) miteinander zu verbinden sind (Fig.3,4).

5. Unterputzdose nach Anspruch 4, **dadurch gekennzeichnet**, daß der Dosenverbinder (23) aus jeweils zwei identischen Ober- und Unterteilen (23',23'') sowie zwei Seitenwandteilen (23''',23^{IV}) besteht, die allesamt mit an ihren Enden vorhandenen Einschiebeschäften (23^{V}) bzw. -profilen (23^{VI}) versehen sind.

6. Unterputzdose nach Anspruch 2, **dadurch gekennzeichnet**, daß in einige der Einschiebekanäle (17) eine mit entsprechenden Einschiebezapfen (26) versehene Klemmplatte (25) mit unterseitig angeordneten Klemmleisten (27) für eine Kanalgeräte-Montage der Unterputzdose einzuschieben ist (Fig.5,6).

7. Unterputzdose nach Anspruch 1, **dadurch gekennzeichnet**, daß die Einschiebekanäle (28) in kreissegmentförmig profilierten Verdickungen (29) der Dosenwand (1) liegen und dazu im wesentlichen tangential verlaufen (Fig.7 bis 10).

8. Unterputzdose nach Anspruch 7, **dadurch gekennzeichnet**, daß drei kreissegmentförmig profilierte Dosenwandverdickungen (29) mit jeweils mehreren darin übereinander angeordneten, parallel zueinander verlaufenden Einschiebekanälen (28) vorgesehen sind (Fig.7 bis 10).

9. Unterputzdose nach einem der Ansprüche 1 bis 8, **dadurch gekennzeichnet**, daß die Halteborstenkämme (19) ebenso wie die Dose (15,15') selber aus Spritzkunststoff bestehen.

## Claims

1. Concealed socket (15) of plastics material for, in particular, masonry and hollow wall fitting, the socket serving to receive electrical installation devices and/or wiring, and comprising resilient, outwardly projecting gripping means (19) provided at at least three positions arranged spaced around the periphery of the socket sleeve (1), characterised in that the gripping means comprises comb-like supports (19) provided with angled, barb-like, resilient tines (19') which can be cut to length, the comb-like supports each having a basal portion (18) which defines a push-in stem and which is removably insertable in correspondingly profiled, outwardly open, entry channels (17, 28) in the socket sleeve (1).

2. Concealed socket according to claim 1, characterised in that the entry channels (17) each extend axially parallel to the central axis (16) of the socket and at the end towards the outside (5) of the socket have a narrowed entry (20) for a screw means (21) which is arranged to be fitted therethrough, wherein the screw means has its threaded shank (21') arranged to be turned in or to cut into an axially extending bore (18') provided in the basal portion (18) of the comb-like support (19) (Figs.1,2).

3. Concealed socket according to claim 2, characterised in that it is provided with, in total, six entry channels (17) arranged equispaced around its periphery.

4. Concealed socket according to claim 3, characterised in that easily broken out entry zones (22) are provided prestamped or precut in the socket wall (1) between two adjacent entry channels (17), and each pair of adjacent concealed sockets (15) are connected together by a socket connector (23) provided with push-in stems (23^{V}, 23^{VI}) insertable into the adjacent entry channels (17', 17'') of the sockets (15) (Figs. 3,4)

5. Concealed socket according to claim 4, characterised in that the socket connector (23) comprises two identical upper and lower parts (23', 23'') as well as two side wall portions (23''', 23^{IV}), which are all provided with push-in stems (23^{V}) or push-in profiles (23^{VI}) provided at their ends.

6. Concealed socket according to claim 2, characterised in that in some of the entry channels (17) there is inserted a gripping plate (25) provided with corresponding push-in pins (26) and having, on its underside, gripping elements (27) for a channelled fitting of the concealed socket (Figs. 5,6).

7. Concealed socket according to claim 1, characterised in that the entry channels (28) are positioned in profiled thickened portions (29) of the socket wall (1) shaped as segments of a circle and extend substantially tangentially thereto (Figs. 7 to 10).

8. Concealed socket according to claim 7, characterised in that three segmental profiled socket wall thickened portions (29) are provided each with a plurality of entry channels (28) therein extending parallel to one another and arranged above one another (Figs. 7 to 10).

9. Concealed socket according to one of claims 1 to 8, characterised in that the comb-like supports (19) as well as the socket (15, 15') itself are of injection moulded plastics material.

## Revendications

1. Boîte de branchement encastrée (15) en matière plastique servant à recevoir du matériel d'installation et/ou des conduites électriques, notamment pour un montage dans un ouvrage de maçonnerie et dans une paroi creuse, comportant, au moins à trois endroits répartis sur la circonférence de l'enveloppe (1) de la boîte, des moyens de serrage élastiques (19) faisant saillie vers l'extérieur, caractérisée en ce que les moyens de serrage se composent de peignes (19) qui sont pourvus de crins de retenue (19') disposés en biais à la manière de barbes, faisant ressort et aptes à être mis à longueur, et dont les branches centrales (18) définissant des tiges d'introduction sont introduites de façon échangeable dans des canaux (17, 28) ouverts vers l'extérieur prévus dans l'enveloppe (1) de la boîte et profilés en conséquence.

2. Boîte de branchement encastrée selon la revendication 1, caractérisée en ce que les canaux d'introduction (17) s'étendent parallèlement à l'axe médian (16) de la boîte et présentent, en direction de la face supérieure (5) de ladite boîte, une ouverture de passage rétrécie (20) pour une vis à tête (21) à faire passer à cet endroit et à visser, avec sa tige filetée (21'), dans un perçage (18') ménagé dans la branche centrale (18) du peigne à crins de retenue (19) et s'étendant axialement (fig. 1, 2).

3. Boîte de branchement encastrée selon la revendication 2, caractérisée en ce qu'elle est pourvue au total de six canaux d'introduction (17) répartis régulièrement sur sa circonférence.

4. Boîte de branchement encastrée selon la revendication 3, caractérisée en ce qu'il est prévu, dans la paroi (1) de la boîte, entre deux canaux d'introduction voisins (17), des ouvertures de passage poinçonnées ou prédécoupées (22) aptes à être facilement enfoncées, et deux boîtes de branchement encastrées voisines (15) peuvent être reliées entre elles par un connecteur de boîtes (23) pourvu de tiges d'introduction (23^{V}, 23^{VI}) à introduire dans les canaux voisins (17' et 17'') des boîtes de branchement (15) (fig. 3, 4).

5. Boîte de branchement encastrée selon la revendication 4, caractérisée en ce que le connecteur de boîtes (23) se compose de deux éléments supérieur et inférieur identiques (23', 23'') et de deux éléments de paroi latéraux (23''', 23^{IV}) qui sont tous pourvus de tiges (23^{V}) et de profilés (23^{VI}) d'introduction prévus à leurs extrémités.

6. Boîte de branchement encastrée selon la revendication 2, caractérisée en ce qu'une plaque de serrage (25) pourvue de tourillons d'introduction (26) appropriés et comportant des nervures de serrage (27) disposées sur la face inférieure en vue d'un montage de la boîte de branchement dans des appareils à conduites, doit être introduite dans quelques-uns des canaux d'introduction (17) (fig. 5, 6).

7. Boîte de branchement encastrée selon la revendication 1, caractérisée en ce que les canaux d'introduction (28) se trouvent dans des épaississements profilés en forme de segments de cercle (29) de la paroi (1) de la boîte et s'étendent sensiblement tangentiellement à celle-ci (fig. 7 à 10).

8. Boîte de branchement encastrée selon la revendication 7, caractérisée en ce qu'il est prévu trois épaississements profilés en forme de segments de cercle (29) de la paroi de la boîte, contenant chacun plusieurs canaux d'introduction (28) superposés et parallèles (fig. 7 à 10).

9. Boîte de branchement encastrée selon l'une des revendications 1 à 8, caractérisée en ce que les peignes à crins de retenue (19) se composent, comme la boîte (15, 15') elle-même, de matière plastique moulée par injection.
